# EUROPÄISCHE PATENTSCHRIFT

(11) **EP 0 592 771 B1**
(45) Veröffentlichungstag und Bekanntmachung des Hinweises auf die Patenterteilung: **05.03.1997**
(21) Anmeldenummer: 93110813.8
(22) Anmeldetag: 07.07.1993
(51) Int. Cl.: F24D 19/10, G05D 23/19

(54) **Verfahren zur Steuerung der Brauchwassertemperatur in einer Brauchwasseranlage und Steuereinrichtung zur Durchführung des Verfahrens**
Method of controlling the temperature of domestic hot water in a domestic hot water supply system and control device for carrying out the method
Procédé pour commander la température de l'eau chaude sanitaire dans une installation d'eau chaude sanitaire et dispositif de commande pour la mise en oeuvre de ce procédé

(30) Priorität: 12.10.1992 CH 3179/92
(43) Veröffentlichungstag der Anmeldung: 20.04.1994
(73) Patentinhaber: Landis & Gyr Technology Innovation AG, 6301 Zug (CH)
(72) Erfinder: Affolter, Erhard, CH-4937 Ursenbach (CH)
(74) Vertreter: Müller, Hans-Jürgen, Dipl.-Ing.

(56) Entgegenhaltungen:
- EP-A- 0 121 164
- DE-A- 3 538 934
- LANDIS & GYR; SIGMAGYR RVP DIGITAL CE1P2440D,7/89

## Beschreibung

Die Erfindung bezieht sich auf ein Verfahren zur Steuerung der Brauchwassertemperatur in einer Brauchwasseranlage sowie auf eine Steuereinrichtung zur Durchführung des Verfahrens gemäss den Oberbegriffen der Ansprüche 1 und 7.

Solche Steuereinrichtungen werden vorteilhaft zusammen mit einem Brauchwasserregler zur Steuerung beziehungsweise Regelung der Brauchwassertemperatur verwendet, wobei der Brauchwasserregler auch in einem Heizkreisregler integriert sein kann.

Es ist eine Steuereinrichtung dieser Art bekannt (Landis & Gyr, "SIGMAGYR RVP DIGITAL", Beschreibung CE1P2440 D, Juli 1989, Kapitel 8.4), die eine Nachladetaste aufweist und mit der nach einer manuellen Betätigung der Nachladetaste das Brauchwasser unabhängig von einer geltenden Betriebsart oder vom Zustand eines laufenden Heizprogramms während zweieinhalb Stunden heizbar ist. Ohne Einwirkung der Nachladetaste wird das Brauchwasser je nach der geltenden Betriebsart bzw. nach dem Zustand des Heizprogramms entweder mit Hilfe eines Wärmetauschers auf einen einstellbaren, beispielsweise auf 60 °C gesetzten Sollwert geheizt, oder dann ist der Wärmetauscher ausgeschaltet, wonach sich das Brauchwasser je nach Isolation und Brauchwasserbezug abkühlt.

Der Erfindung liegt die Aufgabe zugrunde, ein Verfahren zur Steuerung der Brauchwassertemperatur anzugeben, das zu jeder Zeit warmes Brauchwasser verfügbar macht, jedoch ein unnötiges Warmhalten des Brauchwassers vermeidet, und eine Steuereinrichtung zu schaffen, die nach dem Steuerverfahren arbeitet.

Es ist bekannt, Brauchwasser in einer gattungsfremden Einrichtung (DE G 91 09 421.6) mit einem Durchlauferhitzer erst beim Beziehen zu heizen. Die Einrichtung weist ein magnetschalterbetriebenes Vorrang-Umschalteventil mit einem Membranschalter auf, der durch die entstehende Strömunng beim Beziehen des Brauchwassers betätigt wird.

Die genannte Aufgabe wird erfindungsgemäss durch die Merkmale der Ansprüche 1 und 7 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Schema einer Brauchwasseranlage, welche in einer Heizungsanlage integriert ist,
- Fig. 2: ein Datenflussdiagramm der Steuereinrichtung,
- Fig. 3: ein Ablaufdiagramm zu Verfahrens
- Fig. 4: ein Ablaufdiagramm zu einer Variante des Verfahrens und
- Fig. 5: ein Liniendiagramm zum Prinzip des Verfahrens.

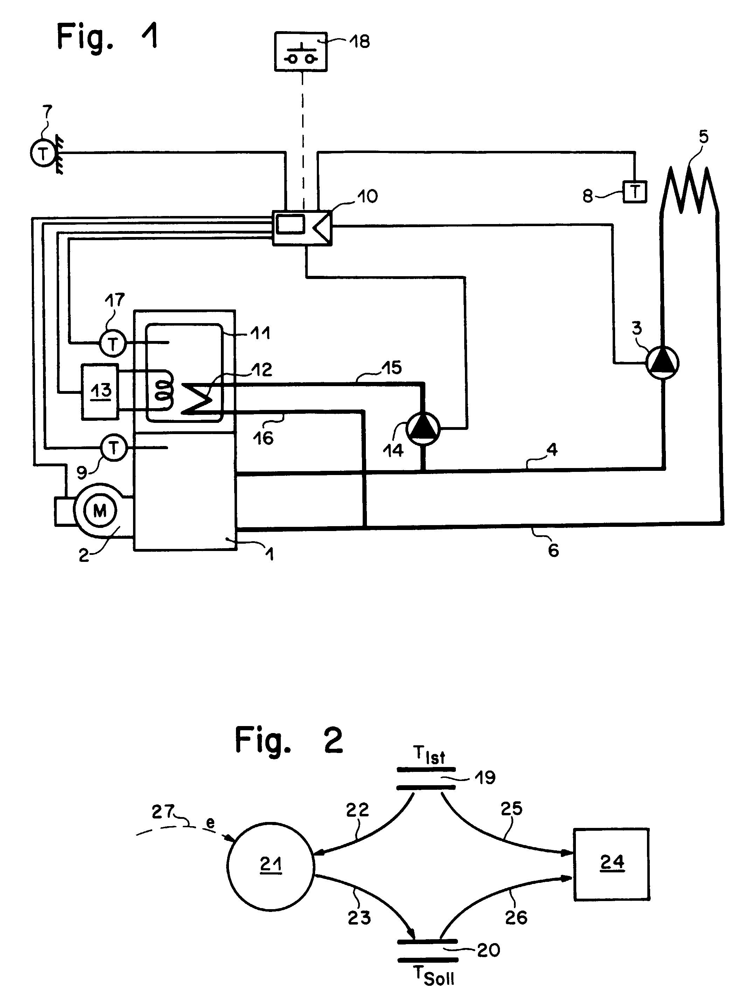

In einer Heizungsanlage in der Fig. 1 bedeutet 1 einen Heizkessel, der durch einen Brenner 2 beheizbar ist. Eine Wärmeträgerflüssigkeit strömt unter der Wirkung mindestens einer Umwälzpumpe 3 durch eine Heizvorlaufleitung 4 zu einem Wärmespender 5, beispielsweise einem Radiatoren, und vom Wärmespender 5 durch eine Heizrücklaufleitung 6 zurück zum Heizkessel 1. Im weiteren weist die Heizungsanlage einen Witterungsfühler 7, ein Raumgerät 8, einen Kesseltemperaturfühler 9 und ein Regelgerät 10 auf. Das Regelgerät 10 weist einen Heizkreisregler auf und ist mit dem Raumgerät 8, der Umwälzpumpe 3, dem Brenner 2, dem Kesseltemperaturfühler 9 und dem Witterungsfühler 7 durch elektrische Leiter verbunden.

In die Heizungsanlage integriert ist eine Brauchwasseranlage, welche einen Brauchwasserspeicher 11 für das Brauchwasser und einen Brauchwasserregler zur Regelung der Brauchwassertemperatur aufweist. Das Brauchwasser ist durch einen weiteren Wärmespender 12 und/oder eine Elektroheizung 13 heizbar.

Die Wärmeträgerflüssikeit strömt unter der Wirkung einer Ladepumpe 14 durch eine von der Heizvorlaufleitung 4 abzweigende Ladevorlaufleitung 15, durch den weiteren Wärmespender 12 und durch eine an der Heizrücklaufleitung 6 angeschlossene Laderücklaufleitung 16.

Der Brauchwasserregler ist im Regelgerät 10 angeordnet und bei Bedarf mit dem Heizkreisregler funktional verbunden.

Die Brauchwassertemperatur ist mittels eines am Brauchwasserregler angeschlossenen Brauchwassertemperaturfühlers 17 messbar.

Der Brauchwasserregler wirkt durch Stellsignale auf die Ladepumpe 14 und/oder auf die Elektroheizung 13 und gegebenenfalls auch auf den Brenner 2.

Im folgenden sind vom Brauchwasserregler je durch Stellsignale beeinflussbare Einrichtungen wie die Ladepumpe 14 und/oder die Elektroheizung 13 und/oder der Brenner 2 auch allgemein als Heizmittel bezeichnet.

Die Brauchwasseranlage ist mindestens in einer Nennbetriebsart und in einer Sparbetriebsart betreibbar, wobei in der Nennbetriebsart ein Sollwert T_{Nenn} und in der Sparbetriebsart grundsätzlich ein weiterer Sollwert T_{Spar} für die angestrebte Brauchwassertemperatur massgebend ist.

Eine geltende Betriebsart wird in bekannter Art entweder manuell über einen Betriebsartenschalter oder selbsttätig von einem Heizprogramm gewählt.

Das Regelgerät 10 weist eine Steuereinrichtung auf, welche auch dann ein Nachladen - das heisst ein zusätzliches Aufheizen - des Brauchwassers ermöglicht, wenn für die Brauchwasseranlage die Sparbetriebsart gewählt ist.

Die bekannte Ausführung der Steuereinrichtung weist eine am Regelgerät 10 angeordnete Nachladetaste 18 auf, welche in einer erfindungsgemässen Ausführung der Steuereinrichtung nicht erforderlich ist.

Die Fig. 2 zeigt den prinzipiellen Aufbau der erfindungsgemässen Steuereinrichtung anhand eines Datenflussdiagrammes. In der gewählten, aus der Literatur bekannten Darstellungsart (D. J. Hatley, I. A. Pirbhai: Strategies for Real-Time System Specification, Dorset House, NY 1988) bedeutet ein Kreis eine Aktivität (activity), ein Rechteck ein angrenzendes System (terminator) und ein Pfeil einen Kommunikationskanal (channel) zur Übertragung von Daten und/oder Ereignissen, wobei die Pfeilspitze in die wesentliche Datenflussrichtung zeigt. Ein Datenspeicher (pool), der allgemein mehreren Aktivitäten zur Verfügung steht, ist durch zwei gleich lange, parallele Linien dargestellt. Im weiteren ist beispielsweise eine Anordnung aus zwei durch einen Kommunikationskanal verbundene Aktivitäten mit einer einzigen Aktivität, welche alle Aufgaben der beiden Aktivitäten erfüllt, äquivalent.

Aktivitäten sind als elektronische Schaltung und/oder als Prozess, Programmstück oder Routine verwirklicht.

In einem ersten Pool 19 ist der Istwert T_{Ist} und in einem zweiten Pool 20 der geltende Sollwert T_{Soll} der Brauchwassertemperatur abgespeichert. Eine Aktivität 21 ist über einen ersten Kommunikationskanal 22 mit dem ersten Pool 19 und über einen zweiten Kommunikationskanal 23 mit dem zweiten Pool 20 verbunden. Ein angrenzendes System 24 ist ein Eingangsteil des Brauchwasserreglers, welches über einen dritten Kommunikationskanal 25 mit dem ersten Pool 19 und über einen vierten Kommunikationskanal 26 mit dem zweiten Pool 20 verbunden ist. Im Bedarfsfall führt ein fünfter Kommunikationskanal 27 für ein Ereignis e zur Aktivität 21.

Der Brauchwasserregler bildet aufgrund der Differenz zwischen dem im zweiten Pool 20 verfügbaren Sollwert T_{Soll} und dem im ersten Pool 19 gespeicherten Istwert T_{Ist} in bekannter Art mindestens ein gewünschtes Stellsignal zur Regelung der Brauchwassertemperatur.

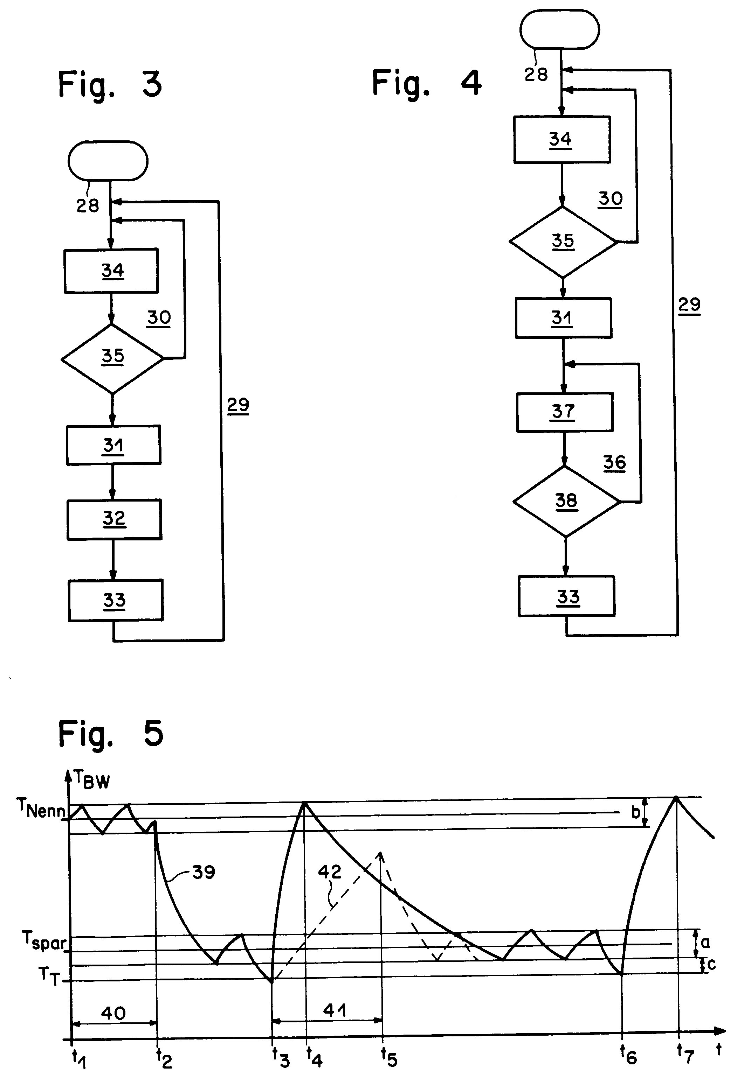

Die Fig. 3 zeigt ein Ablaufdiagramm, in welchem auf einen Anfang 28 eine endlose Schleife 29 folgt, welche als Schleifenschritte eine innere Schleife 30, gefolgt von einem ersten Aktionsblock 31, einem zweiten Aktionsblock 32 und einem dritten Aktionsblock 33 aufweist. Die innere Schleife 30 weist einen vierten Aktionsblock 34 und eine Schleifenbedingung 35 auf.

Ein weiteres, in der Fig. 4 dargestelltes Ablaufdiagramm, unterscheidet sich vom Ablaufdiagramm der Fig. 3 lediglich dadurch, dass nach dem ersten Aktionsblock 31 anstelle des zweiten Aktionsblockes 32 (Fig. 3) eine weitere Schleife 36 folgt, welche einen weiteren Aktionsblock 37 und eine weitere Schleifenbedingung 38 aufweist.

In der Fig. 5 ist mit 39 ein prinzipieller, nicht massstabgetreuer Verlauf der Brauchwassertemperatur T_{BW} abhängig von der Zeit t dargestellt.

In einem ersten, zwischen einem ersten Zeitpunkt t₁ und einem zweiten Zeitpunk t₂ verlaufenden Zeitbereich 40 arbeitet die Brauchwasseranlage in der Nennbetriebsart, deren Sollwert T_{Nenn} der für den Brauchwasserregler geltende Sollwert T_{Soll} ist; die Brauchwassertemperatur T_{BW} verläuft innerhalb von Grenzen, welche von einer Schaltdifferenz b bestimmt sind.

Im Zeitpunkt t₂ - beispielsweise um 22 Uhr - wird die Brauchwasseranlage in die Sparbetriebsart umgeschaltet, womit deren Sollwert T_{Spar} als der geltende Sollwert T_{Soll} für den Brauchwasserregler gesetzt ist. In der Sparbetriebsart strebt der Brauchwasserregler mit einer Schaltdifferenz a den Sollwert T_{Spar} an.

Die Schaltdifferenz a und die Schaltdifferenz b sind auf die gewünschten Eigenschaften des Brauchwasserreglers abgestimmt und betragen beispielsweise je etwa 4 K.

Wenn, beispielsweise die Sollwerte T_{Nenn} und T_{Spar} 60 °C bzw. 40 °C betragen, kein Brauchwasser bezogen wird und der Brauchwasserspeicher 11 in üblicher Art thermisch isoliert ist, dann kann es durchaus mehrere Tage dauern, bis das Brauchwasser auf den Sollwert T_{Spar} abgekühlt ist; bei Brauchwasserbezug kühlt sich das Brauchwasser entsprechend schneller ab.

In einem dritten Zeitpunkt t₃ unterschreitet die Brauchwassertemperatur einen unterhalb des Sollwerts T_{Spar} liegenden Schwellwert T_{T} infolge einer relativ grossen Brauchwasserentnahme in der Sparbetriebsart.

Die Brauchwassertemperatur wird von der Aktivität 21 (Fig. 2) überwacht, indem der mittels des Brauchwassertemperaturfühlers 17 gemessene und im ersten Pool 19 verfügbare Istwert T_{Ist} mit dem Schwellwert T_{T} mit Vorteil periodisch verglichen wird.

Wenn der Istwert T_{Ist} den Schwellwert T_{T} unterschreitet, führt die Aktivität 21 den in der Nennbetriebsart massgebenden Sollwert T_{Nenn} bis zu einem vorbestimmten Ereignis unabhängig von der geltenden Betriebsart als der geltende Sollwert T_{Soll} ein, indem der Sollwert T_{Nenn} in den zweiten Pool 20 kopiert wird. Bei Eintreten des Ereignisses wird der geltende Sollwert T_{Soll} wieder gemäss der geltenden Betriebsart eingesetzt; in der Sparbetriebsart kopiert die Aktivität den Sollwert T_{Spar} in den zweiten Pool 20.

Das vorbestimmte Ereignis ist mit Vorteil eine Angleichung des Istwerts T_{Ist} der Brauchwassertemperatur an den in der Nennbetriebsart massgebenden Sollwert T_{Nenn}. Die Angleichung ist in der Fig. 5 beispielhaft bei einem vierten Zeitpunkt t₄ ersichtlich.

Mit 42 ist ein weiterer möglicher Verlauf der Brauchwassertemperatur bei einer grösseren Brauchwasserentnahme vom Zeitpunkt t₃ an als gestrichelte Linie eingezeichnet.

Das vorbestimmte und im Verlauf 42 sichtbar Ereignis kann mit Vorteil auch das Erreichen eines fünften Zeitpunktes t₅ sein, welcher nach einer vorbestimmten Zeitspanne 41 auf das im dritten Zeitpunkt t₃ erfolgte Unterschreiten des Schwellwertes T_{T} folgt.

Die vorbestimmte Zeitspanne 41 ist vorteilhaft die maximal zugelassene Einschaltzeit des Heizmittels. Für die Ladepumpe 14 in der in der Heizungsanlage integrierten Brauchwasseranlage, beträgt die Zeitspanne 41 vorteilhaft etwa zweieinhalb Stunden; eine wesentlich grössere Zeitspanne könnte sich entsprechend stärker auf die Arbeitsweise der Heizungsanlage auswirken.

Bei Bedarf wird die Zeitspanne 41 und auch die Angleichung des Istwertes T_{Ist} an den Sollwert T_{Nenn} überwacht und das Heizmittel beim zeitlich ersten der beiden überwachten Ereignisse abgeschaltet.

Im Verlauf 39 wird zu einem sechsten Zeitpunkt t₆ der Schwellwert T_{T} ein weiteres Mal unterschritten, worauf das Brauchwasser erneut stark aufgeheizt wird. Die Brauchwassertemperatur erreicht den Sollwert T_{Nenn} im Beispiel kurz vor einem siebten Zeitpunkt t₇.

Die Aktivität führt mit Vorteil Verfahrensschritte nach dem in der Fig. 3 gezeigten Ablaufdiagramm aus. In der inneren Schleife 30 wird die Brauchwassertemperatur überwacht, indem im vierten Aktionsblock 34 der Istwert T_{Ist} erfasst und in der Schleifenbedingung 35 der Istwert T_{Ist} mit dem Schwellwert T_{T} verglichen wird.

Mit Vorteil wird die innere Schleife 30 im wesentlichen periodisch durchlaufen, was mit Hilfe des Ereignisses e (Fig. 2) erreichbar ist, wenn dieses periodisch ist und das Erfassen des Istwerts T_{Ist} im vierten Aktionsblock 34 auslöst.

Die innere Schleife 30 wird beendet, wenn der Istwert T_{Ist} kleiner als der Schwellwert T_{T} ist.

Im ersten Aktionsblock 31 wird der geltende Sollwert T_{Soll} gleich dem in der Nennbetriebsart geltenden Sollwert T_{Nenn} gesetzt und im Aktionsblock 32 wird in einer bekannten Art das vorbestimmte Ereignis abgewartet.

Nachfolgend dem Ereignis wird im dritten Aktionsblock 33 der geltende Sollwert T_{Soll} wieder gemäss der geltenden Betriebsart gesetzt.

Die Aktivität 21 (Fig. 2) führt mit Vorteil nach dem ersten Aktionsblock 31 die weitere Schleife 36 (Fig. 4) aus, wenn das vorbestimmte Ereignis die Angleichung des Istwerts T_{Ist} an den in der Nennbetriebsart massgebenden Sollwert T_{Nenn} ist.

In der weiteren Schleife 36 wird die Brauchwassertemperatur überwacht, indem im Aktionsblock 36 der Istwert T_{Ist} erfasst und in der Schleifenbedingung 38 der Istwert T_{Ist} mit dem Sollwert T_{Nenn} verglichen wird.

Mit Vorteil wird die weitere Schleife 36 im wesentlichen periodisch durchlaufen, was mit Hilfe des Ereignisses e (Fig. 2) erreichbar ist, wenn es periodisch ist und das Erfassen des Istwerts T_{Ist} im Aktionsblock 36 auslöst.

Die weitere Schleife 36 wird beendet, wenn der Istwert T_{Ist} den Sollwert T_{Soll} erreicht.

Im Verfahren zur Steuerung der Brauchwassertemperatur wird erfindungsgemäss ein Grenzwert eingeführt, welcher unterhalb des in der Nennbetriebsart geltenden Sollwertes T_{Nenn} liegt, und die Brauchwassertemperatur wird auch in der Sparbetriebsart überwacht.

Je nach Bedarf ist der Grenzwert die untere Schwelle der Schaltdifferenz a des in der Sparbetriebsart geltenden Sollwertes T_{Spar} oder der Grenzwert ist der Schwellwert T_{T}. Der Sollwert T_{Spar} und auch der Schwellwert T_{T} sind mit Vorteil am Gerät veränderbar.

In einer ersten Variante des Verfahrens benutzt der Brauchwasserregler in der Sparbetriebsart den Sollwert T_{Spar}, der mit Vorteil bei der gewünschten Badwassertemperatur, also etwa im Bereich von 35 bis 40 °C liegt. Diese Variante ist besonders bei grösseren Brauchwasserspeichern 11, die eine relativ lange Aufheizzeit erfordern, vorteilhaft. Wenn die Brauchwasseranlage mehrere Tage in der Sparbetriebsart arbeitet, ergibt sich wegen der relativ kleinen Temperaturdifferenz zwischen dem Brauchwasser und dessen Umgebung nur ein geringer Energieverlust. Bei wiederholtem Brauchwasserbezug in der Sparbetriebsart, weist das Brauchwasser jedoch höchstens etwa die Temperatur des Sollwerts T_{Spar} auf. Die Brauchwasseranlage arbeitet analog einer Heizungsanlage, welche ebenfalls zwei unterschiedliche Sollwerte aufweist.

In einer zweiten Variante des Verfahrens wird in der Sparbetriebsart die Brauchwassertemperatur durch die Aktivität 21 überwacht und, wenn der Istwert T_{Ist} den Schwellwert T_{T} unterschreitet, wird das Brauchwasser so lange aufgeheizt, bis das vorbestimmte Ereignis eintritt. Der Schwellwert T_{T} liegt vorteilhaft bei der gewünschten Badwassertemperatur, also etwa im Bereich von 35 bis 40 °C. In dieser Variante wird der weitere Sollwert T_{Spar} nicht eingeführt, oder tiefer als der Schwellwert T_{T} angeordnet. Verglichen mit der ersten Variante, wird das Heizmittel in der Sparbetriebsart in vorteilhafter Art weniger oft eingeschaltet. Falls der Schwellwert T_{T} erreicht wird, wird das Brauchwasser aufgeheizt, so dass bei einem nachfolgenden Bezug, verglichen mit der ersten Variante wärmeres Brauchwasser verfügbar ist.

Eine dritte Variante des Verfahrens ist eine Kombination der ersten und der zweiten Variante: der Brauchwasserregler arbeitet in der Sparbetriebsart nach dem weiteren Sollwert T_{Spar}, der mit Vorteil etwa bei 40 °C liegt. Zudem wird die Brauchwassertemperatur durch die Aktivität 21 überwacht und, wenn der Istwert T_{Ist} den Schwellwert T_{T} unterschreitet, wird das Brauchwasser so lange aufgeheizt, bis das vorbestimmte Ereignis eintritt. Der Schwellwert T_{T} liegt um einem bestimmten Betrag c unterhalb der unteren Grenze der beim weiteren Sollwert T_{Spar} geltenten Schaltdifferenz a. Mit Vorteil beträgt der Betrag c etwa die halbe Schaltdifferenz a.

Dadurch, dass für die Sparbetriebsart ein Sollwert T_{Spar} eingeführt und/oder ein Schwellwert T_{T} eingeführt und die Brauchwassertemperatur auch in der Sparbetriebsart überwacht wird, ist zu jeder Zeit warmes Brauchwasser verfügbar.

## Patentansprüche

1. Verfahren zur Steuerung der Brauchwassertemperatur in einer in eine Nennbetriebsart und in eine Sparbetriebsart schaltbaren Brauchwasseranlage,
bei der die Differenz zwischen einem Istwert (Tᵢₛₜ) und einem Sollwert (T_{Soll}) der Brauchwassertemperatur in ein Stellsignal für ein zur Erwärmung des Brauchwassers nutzbares Heizmittel (14; 13; 2) umwandelbar ist, und
bei der für die Brauchwassertemperatur ein tiefer als der in der Nennbetriebsart geltende Sollwert (T_{Nenn}) liegende Schwellwert (T_{T}) definiert ist,
**dadurch gekennzeichnet**,
daß in der Sparbetriebsart der Sollwert (T_{Soll}) der Brauchwassertemperatur auf den für die Nennbetriebsart geltenden Sollwert (T_{Nenn}) eingestellt wird, wenn der Istwert (Tᵢₛₜ) der Brauchwassertemperatur unter den Schwellwert (T_{T}) fällt.

2. Verfahren nach Anspruch 1,
dadurch gekennzeichnet,
daß in der Sparbetriebsart, wenn die Brauchwassertemperatur unter den Schwellwert (T_{T}) fällt, das Heizmittel (14; 13; 2) solange eingeschaltet wird, bis der Istwert (Tᵢₛₜ) an den in der Nennbetriebsart geltenden Sollwert (T_{Nenn}) angeglichen ist oder bis eine vorbestimmte Zeitspanne (41) abgelaufen ist.

3. Verfahren nach Anspruch 1 oder 2,
dadurch gekennzeichnet,
daß in der Sparbetriebsart der Sollwert (T_{Soll}) der Brauchwassertemperatur auf einen unter dem für die Nennbetriebsart geltenden Sollwert (T_{Nenn}) liegenden Sollwert (T_{Spar}) eingestellt wird, der über dem Schwellwert (T_{T}) liegt.

4. Verfahren nach einem der vorhergehenden Ansprüche,
dadurch gekennzeichnet,
daß zur Regelung der Isttemperatur (Tᵢₛₜ) des Brauchwassers auf die Solltemperatur (T_{Soll}), der Solltemperatur in der Nennbetriebsart (Tₙₑₙₙ) eine Schaltdifferenz (b) und/oder der Solltemperatur in der Sparbetriebsart (T_{Spar}) eine Schaltdifferenz (a) zugeordnet wird.

5. Verfahren nach einem der vorhergehenden Ansprüche,
dadurch gekennzeichnet,
daß der Schwellwert (T_{T}) die untere Schwelle (T_{Spar}- a/2) der Schaltdifferenz der Solltemperatur (T_{Spar}) in der Sparbetriebsart ist.

6. Verfahren nach einem der vorhergehenden Ansprüche,
dadurch gekennzeichnet,
daß der Schwellwert (T_{T}) um einen bestimmten Betrag (c) tiefer liegt als die untere Schwelle (T_{Spar} - a/2) der Schaltdifferenz der Solltemperatur (T_{Spar}) in der Sparbetriebsart.

7. Steuereinrichtung zur Steuerung der Brauchwassertemperatur in einer in eine Nennbetriebsart und in eine Sparbetriebsart schaltbaren Brauchwasseranlage,
mit einem Regelgerät (10), das die Differenz zwischen einem Istwert (Tᵢₛₜ) und einem Sollwert (T_{Soll}) der Brauchwassertemperatur in ein Stellsignal für ein zur Erwärmung des Brauchwassers nutzbares Heizmittel (14; 13; 2) umwandelt,
**dadurch gekennzeichnet**,
daß das Regelgerät (10) den Sollwert (T_{Soll}) der Brauchwassertemperatur auf den für die Nennbetriebsart geltenden Sollwert (T_{Nenn}) einstellt, wenn der Istwert (Tᵢₛₜ) der Brauchwassertemperatur bei der Sparbetriebsart unter einen unter dem für die Nennbetriebsart geltenden Sollwert (T_{Nenn}) liegenden Schwellwert (T_{T}) fällt.

## Claims

1. A method of controlling the industrial-use water temperature in an industrial-use water installation which can be switched into a rated mode and into an economy mode, in which the difference between an actual value (Tᵢₛₜ) and a reference value (T_{Soll}) of the industrial-use water temperature can be converted into a setting signal for a heating means (14; 13; 2) which can be used for heating the industrial-use water, and in which a threshold value (T_{T}) which is lower than the reference value (T_{Nenn)} which applies in the rated mode is defined for the industrial-use water temperature, characterised in that in the economy mode the reference value (T_{Soll}) of the industrial-use water temperature is set to the reference value (T_{Nenn}) which applies for the rated mode when the actual value (Tᵢₛₜ) of the industrial-use water temperature falls below the threshold value (T_{T}).

2. A method according to claim 1 characterised in that in the economy mode when the industrial-use water temperature falls below the threshold value (T_{T}) the heating means (14; 13; 2) is switched on until the actual value (Tᵢₛₜ) is brought into line with the reference value (T_{Nenn}) which applies in the rated mode or until a predetermined period of time (41) has elapsed.

3. A method according to claim 1 or claim 2 characterised in that in the economy mode the reference value (T_{Soll}) of the industrial-use water temperature is set to a reference value (T_{Spar}) which is below the reference value (T_{Nenn}) that applies for the rated mode, and which is above the threshold value (T_{T}).

4. A method according to one of the preceding claims characterised in that for regulating the actual temperature (Tᵢₛₜ) of the industrial-use water to the reference temperature (T_{Soll}), a switching difference (b) is associated with the reference temperature in the rated mode (T_{Nenn}) and/or a switching difference (a) is associated with the reference temperature in the economy mode (T_{Spar}).

5. A method according to one of the preceding claims characterised in that the threshold value (T_{T}) is the lower threshold (T_{Spar} - a/2) of the switching difference of the reference temperature (T_{Spar}) in the economy mode.

6. A method according to one of the preceding claims characterised in that the threshold value (T_{T}) is lower by a given amount (c) than the lower threshold (T_{Spar} - a/2) of the switching difference of the reference temperature (T_{Spar}) in the economy mode.

7. A control apparatus for controlling the industrial-use water temperature in an industrial-use water installation which can be switched into a rated mode and into an economy mode, comprising a regulating device (10) which converts the difference between an actual value (Tᵢₛₜ) and a reference value (T_{Soll}) of the industrial-use water temperature into a setting signal for a heating means (14; 13; 2) which can be used for heating the industrial-use water characterised in that the regulating device (10) sets the reference value (T_{Soll}) of the industrial-use water temperature to the reference value (T_{Nenn}) which applies for the rated mode when the actual value (Tᵢₛₜ) of the industrial-use water temperature in the economy mode falls below a threshold value (T_{T}) which is below the reference value (T_{Nenn}) which applies for the rated mode.

## Revendications

1. Procédé de commande de la température de l'eau chaude sanitaire dans une installation d'eau chaude sanitaire pouvant être branchée en mode de service nominal et en mode de service à économie de consommation d'énergie,
suivant lequel la différence entre une valeur réelle (T_{réel}) et une valeur de consigne (T_{cons}) de la température de l'eau chaude sanitaire peut être convertie en un signal réglant d'un moyen de chauffage (14 ; 13 ; 2) utilisable pour le chauffage de l'eau sanitaire et
suivant lequel une valeur de seuil (T_{T}) qui est inférieure à la valeur de consigne (Tₙₒₘ) qui est en vigueur en mode de service nominal est définie pour la température de l'eau sanitaire,
caractérisé en ce que
en mode de service à économie de consommation d'énergie la valeur de consigne (T_{cons}) de la température de l'eau chaude sanitaire est réglée à la valeur de consigne (Tₙₒₘ) qui est en vigueur pour le mode de service nominal lorsque la valeur réelle (T_{réel}) de la température de l'eau sanitaire tombe sous la valeur de seuil (T_{T}).

2. Procédé selon la revendication 1,
caractérisé en ce que
en mode de service à économie de consommation d'énergie lorsque la température de l'eau sanitaire tombe sous la valeur de seuil (T_{T}), le moyen de chauffage (14 ; 13 ; 2) est branché jusqu'à ce que la valeur réelle (T_{réel}) aie atteint le niveau de la valeur de consigne (Tₙₒₘ) qui est en vigueur en mode de service nominal ou jusqu'à ce qu'un intervalle de temps prédéterminé (41) se soit écoulé.

3. Procédé selon la revendication 1 ou 2,
caractérisé en ce que
en mode de service à économie de consommation d'énergie, la valeur de consigne (T_{cons}) de la température de l'eau sanitaire est réglée à une valeur de consigne (T_{écon}) qui est inférieure à la valeur de consigne (Tₙₒₘ) qui est en vigueur en mode de service nominal et qui est supérieure à la valeur de seuil (T_{T}).

4. Procédé selon l'une des revendications précédentes.
caractérisé en ce que
pour le réglage de la température réelle (T_{réel}) de l'eau sanitaire à la température de consigne (T_{cons}), une différence de commutation (b) est affectée à la température de consigne en mode de service nominal (Tₙₒₘ) et/ou une différence de commutation (a) est affectée à la température de consigne en mode de service à économie de consommation d'énergie (T_{écon}).

5. Procédé selon l'une des revendications précédentes,
caractérisé en ce que
la valeur de seuil (T_{T}) est, en mode de service à économie de consommation d'énergie, le seuil inférieur (T_{écon} - a/2) de la différence de commutation de la température de consigne (T_{écon}).

6. Procédé selon l'une des revendications précédentes.
caractérisé en ce que
la valeur de seuil (T_{T}) est inférieure d'une valeur déterminée (c) au seuil inférieur (T_{écon} - a/2) de la différence de commutation de la température de consigne (T_{écon}) en mode de service à économie de consommation d'énergie.

7. Dispositif de commande destiné à la commande la température de l'eau sanitaire d'une installation d'eau chaude sanitaire commutable en mode de service nominal et en mode de service à économie de consommation d'énergie,
comprenant un appareil de réglage (10) qui convertit la différence entre une valeur réelle (T_{réel}) et une valeur de consigne (T_{cons}) de la température de l'eau sanitaire en un signal réglant d'un moyen de chauffage (14 ; 13 ; 2) utilisable pour le chauffage de l'eau sanitaire,
caractérisé en ce que
l'appareil de réglage (10) règle la valeur de consigne (T_{cons}) de la température de l'eau sanitaire à la valeur de consigne (Tₙₒₘ) qui est en vigueur en mode de service nominal lorsque la valeur réelle (T_{réel}) de la température de l'eau sanitaire tombe, en mode de service à économie de consommation d'énergie, au-dessous d'une valeur de seuil (T_{T}) qui est inférieure à la valeur de consigne (Tₙₒₘ) qui est en vigueur en mode de service nominal.
